# EUROPÄISCHE PATENTSCHRIFT

(11) **EP 1 803 527 B1**
(45) Veröffentlichungstag und Bekanntmachung des Hinweises auf die Patenterteilung: **12.09.2018**
(21) Anmeldenummer: 06024590.9
(22) Anmeldetag: 28.11.2006
(51) Int. Cl.: B23P 19/04, F02F 7/00

(54) **Verfahren zum gemeinsamen Ein- und/oder Ausbau eines Kolbens und einer Zylinderlaufbuchse**
Method for collective mounting and/or dismounting of a piston and a cylinder liner.
Procède d'assemblage et/ou de démontages en commun de la bielle et de la chemise du cylindre

(30) Priorität: 23.12.2005 AT 20692005
(43) Veröffentlichungstag der Anmeldung: 04.07.2007
(73) Patentinhaber: GE Jenbacher GmbH & Co OG, 6200 Jenbach (AT)
(72) Erfinder: Stauder, Kurt, 6200 Jenbach (AT)
(74) Vertreter: Torggler & Hofinger Patentanwälte

(56) Entgegenhaltungen:
- DE-A1- 19 636 089
- DE-C1- 3 803 890
- GB-A- 1 224 706

## Beschreibung

Die vorliegende Erfindung betrifft ein Verfahren zum gemeinsamen Ein- und/oder Ausbau eines Kolbens und einer Zylinderlaufbuchse in und/oder aus einem Motorblock einer Brennkraftmaschine, wobei während des Ein- und/oder Ausbaus die Zylinderlaufbuchse auf einem an einem Pleuel des Kolbens angeordneten, vorzugsweise einstückig angeformten, Anlagebund abgestützt bzw. gehalten wird. Darüber hinaus betrifft die Erfindung auch eine Anordnung mit einer Zylinderlaufbuchse und einem darin anordenbaren Kolben und gegebenenfalls einem am Kolben angeordneten Pleuel sowie das Pleuel als auch eine Brennkraftmaschine und eine Greifeinrichtung.

Vor allem bei Großmotoren, wie zum Beispiel stationären Gasmotoren, stellt sich das Problem, dass aus Festigkeitsgründen das die Kurbelwelle der Brennkraftmaschine umgreifende Pleuelauge so groß ausgeführt sein muss, dass das Pleuel beim Ein- und/oder Ausbau des Kolbens nicht mehr durch die Zylinderlaufbuchse hindurch geführt werden kann. Für diese Situation ist es beim Stand der Technik bereits bekannt, Kolben, Pleuel und Zylinder gemeinsam ein- und/oder auszubauen. So zeigt die DE 196 36 089 A1 eine Vorrichtung zur Montage und Demontage von Kolben, Pleuel und Zylinderbüchse, welche aus einer Fixiereinrichtung zum Arretieren des Kolbens und des Pleuels in der Zylinderbüchse im oberen Totpunkt besteht. Auch wurde bereits vorgeschlagen, Greifeinrichtungen zu verwenden, die sowohl am Kolben als auch an der Zylinderlaufbuchse fixiert werden. Dies hat jedoch den Nachteil, dass am Kolben und an der Zylinderlaufbuchse zusätzliche Gewinde, Ösen, Haken oder dergleichen vorgesehen sein müssen. Alternativ ist es auch bekannt, Spreizkörper in der Zylinderlaufbuchse zu verspreizen und den Kolben über Unterdruck zu halten. Diese Vorgehensweise hat jedoch den Nachteil, dass durch Undichtigkeiten immer die Gefahr besteht, dass der Kolben beim Ein- und/oder Ausbau nicht ausreichend sicher gehalten ist. Darüber hinaus ist die rein auf Reibung basierende Befestigung der Zylinderlaufbuchse auch eher nur für leichtere Anordnungen aus Zylinderlaufbuchse und Kolben geeignet.

Aufgabe der Erfindung ist es, ein gattungsgemäßes Verfahren zur Verfügung zu stellen, bei dem die genannten Probleme vermieden sind.

Dies wird erfindungsgemäß erreicht, indem der Kolben und die Zylinderlaufbuchse während des Ein- und/oder Ausbaus gemeinsam, vorzugsweise ausschließlich, am Kolben gehalten und/oder in den Motorblock hineingeschoben und/oder aus dem Motorblock herausgezogen werden.

Eine Grundidee der Erfindung ist es somit, die Zylinderlaufbuchse während des Ein-und/oder Ausbaus auf einem Anlagebund, weicher sich am Pleuel des Kolbens befinden kann, abzustützen, wodurch die Zylinderlaufbuchse sicher gehalten ist. Ein Herabfallen der Zylinderlaufbuchse kann damit verhindert werden.

Bei kleineren Zylinderlaufbuchsen und Kolben ist es dabei möglich, den Kolben von Hand anzugreifen und zu halten, Vor allem bei größeren und schwereren Anordnungen ist es aber in der Regel günstig, eine Greifeinrichtung zu verwenden, um den Kolben und daran hängend auch Pleuel und Zylinderlaufbuchse zu halten. Bei all diesen Varianten ist somit vorgesehen, dass die Zylinderlaufbuchse an Pleuel und/oder Kolben hängt und die gesamte Anordnung am Kolben angefasst bzw. gehalten wird.

Gemäß eines weiteren Aspektes der Erfindung ist somit auch eine Greifeinrichtung zum Umgreifen eines Kolbens einer solchen Anordnung vorgesehen, welche für das erfindungsgemäße Verfahren eingesetzt werden kann, wobei die Greifeinrichtung mindestens einen Vorsprung zum Eingriff in eine Nut an einem Kolben, und vorzugsweise mindestens zwei Halbschalen, aufweist.

Eine Anordnung mit einer Zylinderlaufbuchse und einem darin anordenbaren Kolben, welche für die Durchführung des Verfahrens geeignet ist, sieht vor, dass das Pleuel einen, vorzugsweise einstückig angeordneten, Anlagebund aufweist, an dem die Zylinderlaufbuchse während des Ein- und/oder Ausbaus abstützbar bzw. haltbar ist, wobei am Kolben und/oder dem gegebenenfalls vorhandenen Pleuel mindestens eine weitere Stützfläche vorgesehen ist, welche, vorzugsweise zusammen mit dem Anlagebund oder den Anlagebünden, dazu geeignet ist, den Kolben und/oder das Pleuel in der Zylinderlaufbuchse zu zentrieren. Entsprechend umfasst die Erfindung gemäß eines weiteren Aspekts auch hierfür geeignete Pleuel sowie Brennkraftmaschinen, welche eine solche Anordnung aufweisen. Bei den Brennkraftmaschinen kann es sich zum Beispiel um stationäre Gasmotoren handeln.

Weitere Einzelheiten und Merkmale der Erfindung ergeben sich aus der nachfolgenden Figurenbeschreibung. Dabei zeigen:
- Fig. 1: eine perspektivische Schnittdarstellung eines Motorblocks mit einem ersten Ausführungsbeispiel einer erfindungsgemäßen Anordnung aus Zylinderlaufbuchse, Kolben und Pleuel,
- Fig. 2: einen entsprechenden vertikalen und ebenen Schnitt,
- Fig. 2a: eine Detaildarstellung aus Fig. 2 in dem Bereich, in dem die Zylinderlaufbuchse auf dem Pleuel beim Ein- und/oder Ausbau abgestützt ist,
- Fig. 3: einen Detailschnitt im Bereich des Kolbens und der Greifeinrichtung,
- Fig. 4: einen vertikalen und ebenen Schnitt durch ein zweites erfindungsgemäßes Ausführungsbeispiel und
- Fig. 4a: eine Detaildarstellung aus Fig. 4 in dem Bereich, in dem die Zylinderlaufbuchse auf dem Pleuel beim Ein- und/oder Ausbau abgestützt ist.

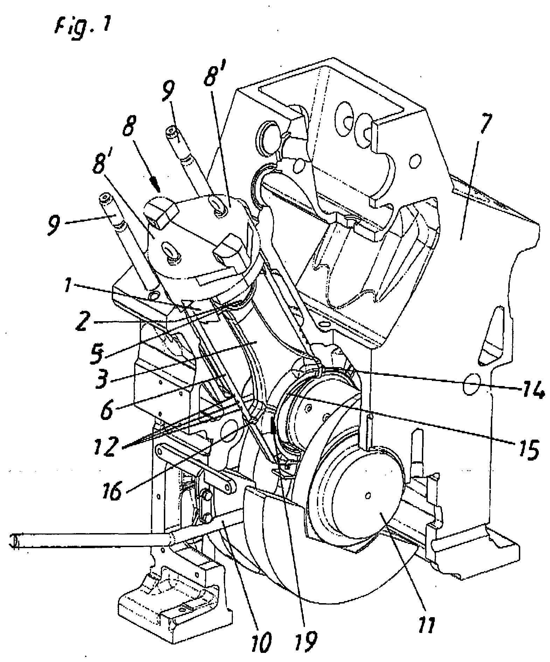

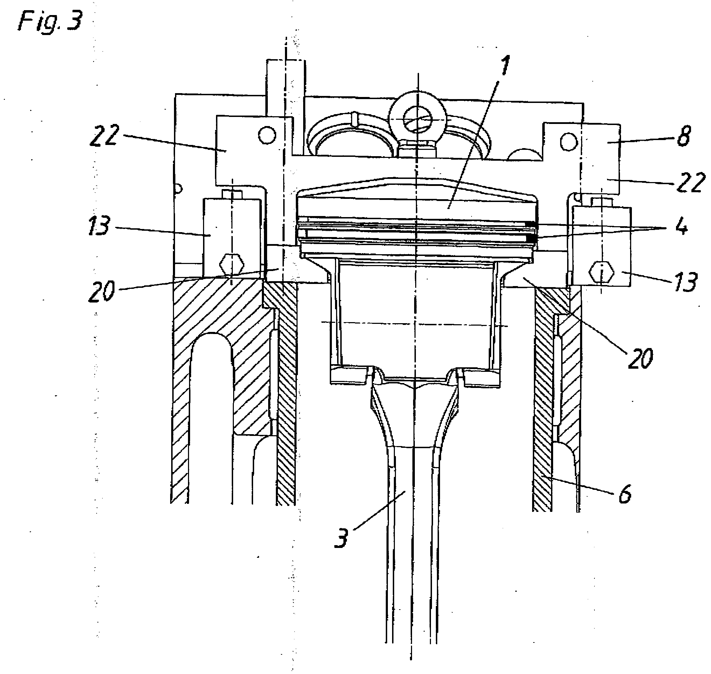

Die Figuren 1, 2 und 4 zeigen den Zustand, bei dem der hier nicht mehr dargestellte Pleuelbügel vom Pleuel 3 gelöst und das Pleuelauge 19 von der Kurbelwelle 11 abgehoben ist. Das Pleuel 3 ist in der gezeigten Darstellung mittels des Montagegestänges 10 auf der Zylinderkopfseite so weit nach oben aus der Zylinderlaufbuchse 6 herausgeschoben, dass die zwei Halbschalen 8' der Greifeinrichtung 8 auf den Kolben 1 aufgesetzt werden können und diesen umgreifen. Um zusätzliche Anpassungen des Kolbens an die Art der Greifeinrichtung zu vermeiden, sieht eine günstige Variante vor, dass die Greifeinrichtung 8 mindestens einen Vorsprung zum Eingriff in eine Nut 4 am Kolben 1 aufweist. Dies ermöglicht es nach Entfernung der Kolbenringe, die Greifeinrichtung 8 direkt in die Kolbenringnuten 4, in denen sonst die Kolbenringe sitzen, eingreifen zu lassen. Alternativ kann bei einer Greifeinrichtung auch vorgesehen sein, dass diese den Kolben 8, wie in Fig. 3 dargestellt, mittels, vorzugsweise schräger, Greifflächen 20 hintergreift.

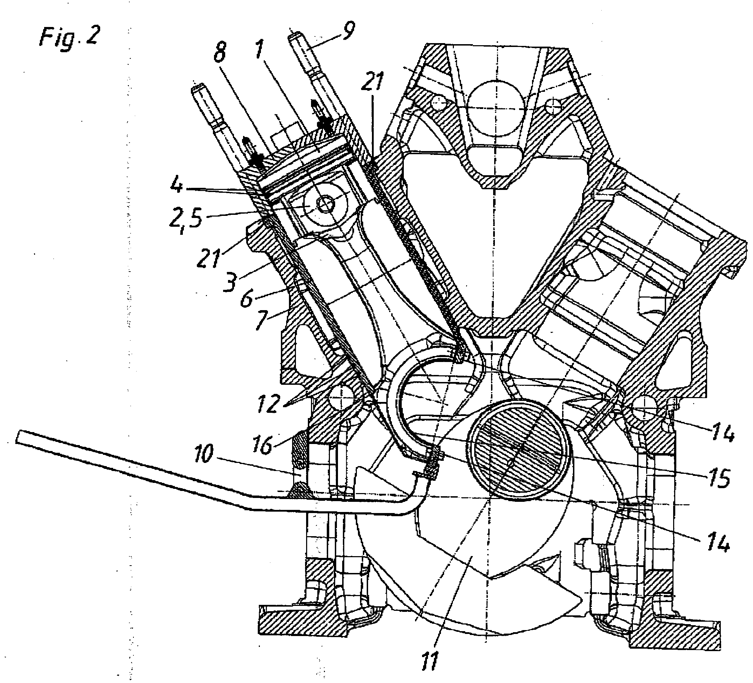

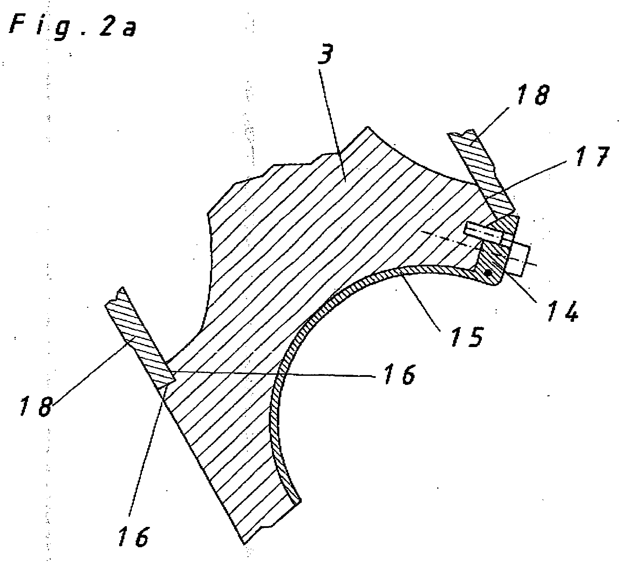

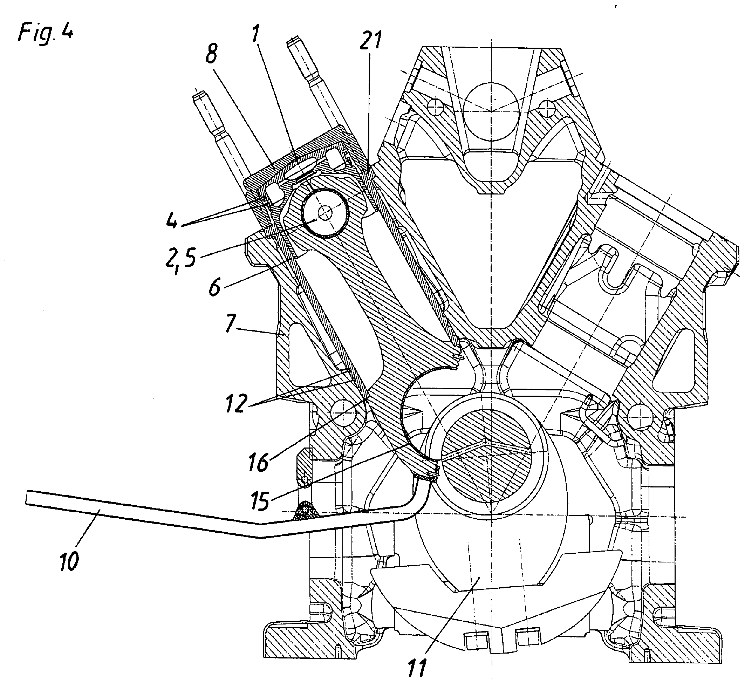

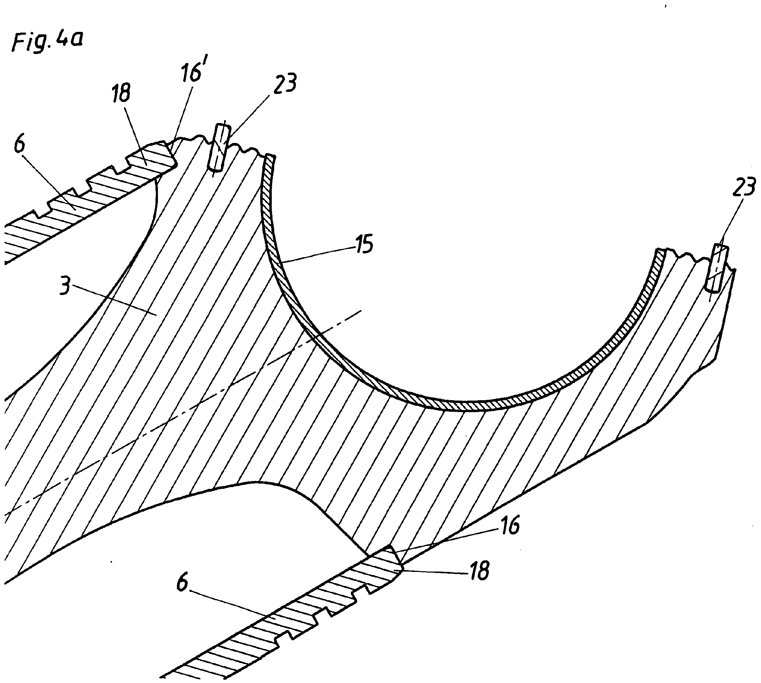

In der in den Fig. 1, 2 und 4 gezeigten Stellung stützt sich die Zylinderlaufbuchse 6 am Anlagebund 16 (Fig. 1 und 2) bzw. an den Anlagebünden 16 und 16' (Fig. 4) des Pleuels 3 ab. Gegenüber dem Anlagebund 16 ist im Ausführungsbeispiel gemäß Fig. 1 und 2 am Pleuel 3 noch zusätzlich eine weitere Stützfläche 17 vorgesehen, welche dazu dient, das Pleuel 3 in der Zylinderlaufbuchse 6 zu zentrieren, sobald das Pleuel 3 von dem nur bei der Montage vorhandenen Gestänge 10 in die in den Fig. 1 und 2 dargestellte Stellung geschoben wird. Unter Zentrieren ist in diesem Zusammenhang im Wesentlichen ein passgenauer Sitz zu verstehen, der es verhindert, dass die Zylinderlaufbuchse 6 beim Ziehen am Kolben 1 vom Anlagebund 16 abrutschen kann. Im Ausführungsbeispiel gemäß Fig. 4 und Fig. 4a kommt es durch das Zusammenwirken der beiden Anlagebünde 16 und 16' zur Zentrierung. Das Pleuel 3 weist im Bereich des Pleuelauges 19, also an seinem in Betriebstellung der Kurbelwelle 11 zugewandten Endbereich, seinen maximalen Durchmesser auf, welcher größer als der Innendurchmesser der Zylinderlaufbuchse 6 ist. Der Anlagebund 16 und die Stützfläche 17 gemäß Fig. 1 und 2 bzw. die Anlagebünde 16 und 16' gemäß Fig. 4 und Fig. 4a sind beim gezeigten Ausführungsbeispiel in diesem Endbereich angeordnet und einstückig am Pleuel 3 angeformt. Der Anlagebund 16 bzw. die Anlagebünde 16, 16' greift (greifen) wie dargestellt am in Einbaustellung zur Kurbelwelle 11 weisenden unteren Rand 18 der Zylinderlaufbuchse 6 an.

Im Folgenden wird nun kurz der Einbau von Kolben 1, Pleuel 3 und Zylinderlaufbuchse 6 mittels eines erfindungsgemäß ausgestalteten Einbauverfahrens beschrieben. Zunächst werden hierzu der Kolben 1, der Kolbenbolzen 2 und das Pleuel 3 zusammengebaut. Der Kolbenbolzen 2 wird mit den Sicherungsringen 5 gesichert. Diese so vormontierte Einheit ist nun von unten, also auf Seite des unteren Randes 18 der Zylinderlaufbuchse 6, in letztere einzuführen. Danach wird die Einheit aus Kolben 1 und Pleuel 3 so weit in der Zylinderlaufbuchse 6 nach oben geschoben, dass sich das Pleuel 3 mittels Anlagebund 16 und weiterer Stützfläche 17 bzw. mittels der Anlagebünde 16, 16' in der Zylinderlaufbuchse 6 zentriert. Letztere liegt nun an dem Anlagebund 16 oder den Anlagebünden 16, 16' auf. Nun werden die Kolbenringe auf den Kolben 1 aufgefädelt und die Greifeinrichtung 8 montiert. Dabei können zum Beispiel die beiden Halbschalen 8' so auf den Kolben 1 aufgesetzt werden, dass die schrägen Greifflächen 20, wie in Fig. 3 gezeigt, den Kolben 1 hintergreifen.

Am offenen Pleuelauge 19 wird nun die Pleuellagerschale 15 mit den in Fig. 2 und 2a gezeigten Fixierlaschen 14 gegen Verdrehen gesichert. Im zweiten Ausführungsbeispiel gemäß den Fig. 4 und 4a sind die Fixierlaschen 14 zwar nicht explizit gezeigt, sie können aber ähnlich wie in dem ersten Ausführungsbeispiel ausgeformt sein. Anschließend werden die Dichtungsringe 12 außen in die entsprechenden Nuten der Zylinderlaufbuchse 6 eingesetzt. Nun wird die so vormontierte Einheit aus Kolben, Pleuel, Zylinderlaufbuchse und Greifeinrichtung von oben, also auf der Zylinderkopfseite in den Motorblock bzw. das Kurbelgehäuse 7 eingeführt, nachdem vorher die Auflagefläche im Kurbelgehäuse 7 mit einem entsprechenden, beim Stand der Technik bekannten Dichtmittel versehen wurde. Die gesamte Einheit wird anschließend - zum Beispiel mittels Kunststoffhammer - in den Motorblock 7 so weit nach unten eingeklopft, bis der Ringbund 21 der Zylinderlaufbuchse 6 an der entsprechenden Passung am Kurbelgehäuse 7 aufliegt. Diese Stellung ist in den Figuren 1, 2 und 4 zu sehen. Nun wird das Montagegestänge 10 seitlich am Kurbelgehäuse 7 montiert und an den Fixierlaschen 14 justiert bzw. befestigt, womit das Pleuel 3 fixiert ist. Im zweiten Ausführungsbeispiel gemäß der Fig. 4 und 4a greift das Montagegestänge 10 nicht an einer Fixierlasche 14 sondern an einem Zentrierstift 23 des Pleuels 3 an ist dies geschehen, so kann die Greifeinrichtung 8 entfernt werden und eine hier nicht dargestellte, aber beim Stand der Technik bekannte Kolbeneinführhülse am oberen Zylinderlaufbuchseneinpass zentriert werden. Nachdem der Kolben 1 von der Greifeinrichtung 8 freigegeben ist, kann das Pleuel 3 zusammen mit dem Kolben 1 mittels des Montagegestänges 10 nach unten bewegt. und das offene Pleuelauge 19 auf die Kurbelwelle 11 aufgesetzt werden. Anschließend kann der hier nicht dargestellte, aber beim Stand der Technik bekannte Pleuelbügel mit eingebauter Pleuellagerschale mit dem Pleuel 3 mit Voranzugsmoment verschraubt werden. Nach dem Entfernen der hier nicht dargestellten Kolbeneinführhülse wird, wie beim Stand der Technik bekannt, mit einer Vorrichtung zum Niederspannen der Zylinderlaufbuchse 6 weiter verfahren. Diese Vorrichtung zum Niederspannen kann anschließend nach dem Aushärten des Dichtmittels und der Dichtheitsprüfung entfernt werden. Die weiteren Schritte zur Montage des Zylinderkopfes an den Zylinderkopfschrauben 9 sind beim Stand der Technik bekannt.

Beim Ausbau kann erfindungsgemäß wie folgt vorgegangen werden: Zunächst wird der in den Figuren nicht dargestellte Pleuelbügel mit der Lagerschale 15 vom Pleuelauge 19 abgeschraubt und demontiert. Die Fixierlaschen 14 werden beim ersten Ausführungsbeispiel gemäß Fig. 1 und 2 an das Pleuel 3 angeschraubt. Danach erfolgt die Montage des Montagegestänges 10 am Kurbelgehäuse 7 und das Justieren bzw. Befestigen des Montagegestänges 10 an der unteren Fixierlasche 14, womit das Pleuel 3 am Gestänge 10 befestigt bzw. fixiert ist. Im zweiten Ausführungsbeispiel greift das Montagegestänge 10 nicht an der Fixierlasche 14 sondern am Zentrierstift 23 an. Nun wird mittels Montagegestänge 10 die Einheit aus Pleuel 3 und Kolben 1 so weit nach oben, also von der Kurbelwelle 11 weg, geschoben, dass das Pleuel 3 mittels der weiteren Stützfläche 17 bzw. der beiden Anlagebünde 16, 16' in der Zylinderlaufbuchse 6 zentriert wird, womit dann die Zylinderlaufbuchse 6 automatisch am Anlagebund 16 bzw. den Anlagebünden 16, 16' des Pleuels 3 anliegt. Bei diesem Aufwärtsschieben wird der Kolben 1 so weit nach oben aus der Zylinderlaufbuchse 6 herausgeschoben, dass die Kolbenringe in den Kolbenringnuten 4 aus der Zylinderlaufbuchse 6 hinausschnappen, womit Kolben 1 und Pleuel 3 gegen ein Zurückgleiten gesichert sind. Anschließend erfolgt die Montage der Greifeihrichtüng 8. Dabei können in einer ersten Variante die beiden Greifflächen 20 den Kolben 1, wie in Fig. 3 gezeigt, hintergreifen. Alternativ kann auch vorgesehen sein, dass man zunächst die Dichtungsringe aus den Kolbenringnuten 4 entfernt, um dann mittels geeigneter Vorsprünge an der Greifeinrichtung 8 direkt in die Kolbenringnuten 4 einzugreifen. Bei beiden Varianten sind jedenfalls nach Abschluss der Montage die Greifeinrichtung 8, Kolben 1, Pleuel 3 und Zylinderlaufbuchse fixiert. Anschließend an die bisher geschilderten Schritte muss nun das Lösen der Zylinderlaufbuchse 6 aus dem Kurbelgehäuse 7 erfolgen. Hierfür kann es ausreichen, das Pleuel 3 und die daran abgestützte Zylinderlaufbuchse 6 mittels des Montagegestänges 10 weiter nach oben aus dem Kurbelgehäuse 7 hinauszudrücken. Häufig kommt es jedoch vor allem nach längerem Betrieb vor, dass die Zylinderlaufbuchse 6 sehr fest im Kurbelgehäuse 7 sitzt. Ist dies der Fall, so kann mittels der in Fig. 3 gezeigten Hydraulikzylinder 13, die Einheit aus Greifeinrichtung 8, Kolben 1, Pleuel 3 und Zylinderlaufbuchse 6 einige Millimeter nach oben gedrückt werden, sodass sich die Verbindung zwischen Zylinderlaufbuchse 6 und Kurbelgehäuse 7 löst. Wie in Fig. 3 dargestellt, ist es dabei günstig, wenn sich die Hydraulikzylinder 13 am Kurbelgehäuse 7 abstützen und gegen entsprechende Vorsprünge 22 an der Greifeinrichtung 8 drücken. Nach dem Lösen der Zylinderlaufbuchse 6 kann die gesamte Einheit an der Greifeinrichtung 8 hängend, von Hand oder bei größeren Einheiten mittels Kran aus dem Kurbelgehäuse 7 herausgehoben werden. Die Zylinderlaufbuchse 6 ist beim Lösen wie auch beim Herausheben erfindungsgemäß am Pleuel 3 abgestützt, während die Greifeinrichtung 8 am Kolben 1 angreift. Die weiteren Schritte der Demontage erfolgen in umgekehrter Reihenfolge wie beim Einbau und müssen daher nicht noch einmal gesondert geschildert werden.

## Patentansprüche

1. Verfahren zum gemeinsamen Ein- und/oder Ausbau eines Kolbens (1) und einer Zylinderlaufbuchse (6) in und/oder aus einem Motorblock (7) einer Brennkraftmaschine, wobei während des Ein- und/oder Ausbaus die Zylinderlaufbuchse (6) auf eiem an einem Pleuel (3) des Kolbens (1) angeordneten, vorzugsweise einstückig angeformten, Anlagebund (16) abgestützt bzw. gehalten wird, **dadurch gekennzeichnet, dass** der Kolben (1) und die Zylinderlaufbuchse (6) während des Ein- und/oder Ausbaus gemeinsam, vorzugsweise ausschließlich, am Kolben (1) gehalten in den Motorblock (7) hineingeschoben und/oder aus dem Motorblock (7) herausgezogen werden.

2. Verfahren nach Anspruch 1, **dadurch gekennzeichnet, dass** die Zylinderlaufbuchse (6) durch den Anlagebund (16) so gehalten wird, dass ein Herabfallen der Zylinderlaufbuchse (6) verhindert wird.

3. Verfahren nach Anspruch 1 oder Anspruch 2, **dadurch gekennzeichnet, dass** der Kolben (1) und die Zylinderlaufbuchse (6) während des Ein- und/oder Ausbaus gemeinsam über eine am Kolben (1) angreifende Greifeinrichtung (8) gehalten in den Motorblock (7) hineingeschoben und/oder aus dem Motorblock (7) herausgezogen werden.

4. Verfahren nach Anspruch 3, **dadurch gekennzeichnet, dass** die Greifeinrichtung (8) im auf den Kolben (1) aufgesetzten Zustand in zumindest eine, vorzugsweise für einen Kolbenring vorgesehene, Nut (4) im Kolben (1) eingreift.

5. Verfahren nach Anspruch 3, **dadurch gekennzeichnet, dass** die Greifeinrichtung (8), vorzugsweise schräge, Greiffächen (20) zum Hintergreifen des Kolbens (1) aufweist.

6. Verfahren nach einem der Ar Sprüche 1 bis 5, **dadurch gekennzeichnet, dass** vor dem Ausbau der Kolben (1) bzw. sein Pleuel (3) von einer Kurbelwelle (11) der Brennkraftmaschine gelöst und der Kolben (1) so weit aus der Zylinderlaufbuchse (6) herausgedrückt wird, dass der Kolben (1), vorzugsweise von einer Greifeinrichtung (8), gegriffen werden kann.

7. Verfahren nach einem der Ansprüche 1 bis 6, **dadurch gekennzeichnet, dass** das Pleuel (3) und/oder der Kolben (1) durch den Anlagebund (16) und gegebenenfalls zumindest eine weitere Stützfläche (17) am Kolben (1) und/oder Pleuel (3) beim Ein- und/oder Ausbau, vorzugsweise automatisch, in der Zylinderlaufbuchse (6) zentriert werden.

8. Verfahren nach einem der Ansprüche 1 bis 7, **dadurch gekennzeichnet, dass** die Zylinderlaufbuchse (6) während des Ein- und/oder Ausbaus an ihrem in Einbaustellung zu einer Kurbelwelle (11) weisenden Rand (18) vom Anlagebund (16) abgestützt bzw. gehalten wird.

9. Verfahren nach einem der Ansprüche 1 bis 8, **dadurch gekennzeichnet, dass** während des Ein- und/oder Ausbaus die Zylinderlaufbuchse (6) auf zumindest zwei an einem Pleuel (3) des Kolbens (1) angeordneten, vorzugsweise einstückig angeformten, Anlagebünden (16, 16') abgestützt bzw. gehalten wird.

10. Anordnung mit einer Zylinderlaufbuchse (6) und einem darin rangeordneten Kolben (1) und einem am Kolben (1) angeordneten Pleuel (3), geeignet für ein Verfahren nach einem der Ansprüche 1 bis 9, wobei das Pleuel (3) einen, vorzugsweise einstückig angeordneten, Anlagebund (16) aufweist, an dem die Zylinderlaufbuchse (6) während des Ein- und/oder Ausbaus abstützbar bzw. haltbar ist, **dadurch gekennzeichnet, dass** am Kolben (1) und/oder dem Pleuel (3) mindestens eine weitere Stützfläche (17) vorgesehen ist, welche, vorzugsweise zusammen mit dem Anlagebund (16) oder den Anlagebünden (16, 16'), dazu geeignet ist, den Kolben (1) und/oder das Pleuel (3) in der Zylinderlaufbuchse (6) zu zentrieren.

11. Anordnung nach Anspruch 10, **dadurch gekennzeichnet, dass** das Pleuel (3) zumindest zwei, vorzugsweise einstückig angeordnete, Anlagebünde (16, 16') aufweist, an denen die Zylinderlaufbuchse (6) während des Ein- und/oder Ausbaus abstützbar bzw. haltbar ist.

12. Anordnung nach Anspruch 10 oder 11, **dadurch gekennzeichnet, dass** der Anlagebund (16) oder die Anlagebünde (16, 16') und/oder die weitere Stützfläche (17) am in Betriebsstellung einer Kurbelwelle (11) zugewandten Endbereich des Pleuels (3), vorzugsweise im Bereich eines Pleuelauges (19), angeordnet ist.

13. Anordnung nach einem der Ansprüche 10 bis 12, **dadurch gekennzeichnet, dass** das Pleuel einen maximalen Durchmesser aufweist, welcher größer als der Innendurchmesser der Zylinderlaufbuchse ist.

14. Brennkraftmaschine, insbesondere stationär betrieben, mit einer Anordnung nach einem der Ansprüche 10 bis 13.

15. Anordnung nach einem der Ansprüche 10 bis 13, **dadurch gekennzeichnet, dass** die Anordnung eine Greifeinrichtung zum Umgreifen des Kolbens (1) umfasst, wobei die Greifeinrichtung (8) mindestens einen Vorsprung zum Eingriff in eine Nut (4) an dem Kolben (1) aufweist.

16. Anordnung nach Anspruch 15, **dadurch gekennzeichnet, dass** die Greifeinrichtung (8) zwei Halbschalen (8') aufweist.

## Claims

1. A method of jointly fitting or removing a piston (1) and a cylinder liner (6) in and/or from an engine block (7) of an internal combustion engine, wherein during the fitting and/or removal operation the cylinder liner (6) is supported or held on a contact shoulder (16) arranged, preferably integrally formed, at a connecting rod (3) of the piston (1), **characterised in that** during the fitting and/or removal operation the piston (1) and the cylinder liner (6) are pushed into the engine block (7) and/or pulled out of the engine block (7) while being held, preferably exclusively, at the piston (1).

2. A method according to claim 1 **characterised in that** the cylinder liner (6) is held by the contact shoulder (16) in such a way that the cylinder liner (6) is prevented from dropping down.

3. A method according to claim 1 or claim 2 **characterised in that** during the fitting and/or removal operation the piston (1) and the cylinder liner (6) are pushed into the engine block (7) and/or pulled out of the engine block (4) while being held jointly by way of a gripping device (8) which engages the piston (1).

4. A method according to claim 3 **characterised in that** the gripping device (8) in the condition of being fitted on to the piston (1) engages into at least one groove (4), preferably adapted to receive a piston ring, in the piston (1).

5. A method according to claim 3 **characterised in that** the gripping device (8) has, preferably inclined, gripping surfaces (20) for gripping behind the piston (1).

6. A method according to at least one of claims 1 through 5 **characterised in that** prior to the removal operation the piston (1) or its connecting rod (3) is released from a crankshaft (11) of the internal combustion engine and the piston (1) is pressed out of the cylinder liner (6) to such an extent that the piston (1) can be gripped, preferably by a gripping device (8).

7. A method according to at least one of claims 1 through 6 **characterised in that** the connecting rod (3) and/or the piston (1) are centered, preferably automatically, in the cylinder liner (6) in the fitting and/or removal operation by the contact shoulder (16) and optionally at least one further support surface (17) on the piston (1) and/or connecting rod (3).

8. A method according to at least one of claims 1 through 7 **characterised in that** during the fitting and/or removal operation the cylinder liner (6) is supported or held by the contact shoulder (16) at the edge (18) of the cylinder liner (6) which in the installation position faces towards a crankshaft (11).

9. A method according to at least one of claims 1 through 8 **characterised in that** during the fitting and/or removal operation the cylinder liner (6) is supported or held on at least two contact shoulders (16, 16') arranged, preferably integrally formed, on a connecting rod (3) of the piston (1).

10. An arrangement having a cylinder liner (6) and a piston (1) which is arranged therein and a connecting rod (3) arranged on the piston (1), suitable for a method as set forth in one of claims 1 through 9, wherein the connecting rod (3) has a, preferably integral formed, contact shoulder (16) at which the cylinder liner (6) can be supported or held during the fitting and/or removal operation, **characterised in that** provided on the piston (1) and/ the connecting rod (3) is at least one further support surface (17) which is, preferably together with at least one contact shoulder (16) or the contact shoulders (16, 16'), suitable for centering the piston (1) and/or the connecting rod (3) in the cylinder liner (6).

11. An arrangement according to claim 10 **characterised in that** the connecting rod (3) has at least two, preferably integrally formed, contact shoulders (16, 16') at which the cylinder liner (6) can be supported and/or held during the fitting and/or removal operation.

12. An arrangement according to claim 10 or 11 **characterised in that** the contact shoulder (16) or the contact shoulders (16, 16') and/or the further support surface (17) is arranged at the end region, which in the operative position faces towards a crankshaft (11), of the connecting rod (3), preferably in the region of a connecting rod eye (19).

13. An arrangement according to at least one of claims 10 through 12 **characterised in that** the connecting rod is of a maximum diameter which is larger than the inside diameter of the cylinder liner.

14. An internal combustion engine, preferably operated stationary, comprising an arrangement as set forth in at least one of claims 1 through 13.

15. An arrangement according to at least one of claims 10 through 13, **characterised in that** the arrangement is comprising a gripping device for gripping around the piston (1), wherein the gripping device (8) comprises at least one projection for engaging into a groove (4) of the piston (1).

16. An arrangement according to claim 15 **characterised in that** the gripping device (8) has at least two half-shell portions (8').

## Revendications

1. Procédé pour le montage et / ou le démontage commun d'un piston (1) et d'une chemise de cylindre (6) dans et / ou hors d'un bloc moteur (7) d'un moteur à combustion interne, dans lequel, pendant le montage et / ou le démontage, la chemise de cylindre (6) est soutenue ou maintenue sur une collerette d'appui (16) disposée sur une bielle (3) du piston (1), formée de préférence d'une seule pièce, **caractérisé en ce que** le piston (1) et la chemise de cylindre (6), pendant le montage et / ou le démontage, sont poussés dans le bloc moteur (7) et / ou sortis du bloc moteur (7) en étant maintenus ensemble, de préférence exclusivement, sur le piston (1).

2. Procédé selon la revendication 1, **caractérisé en ce que** la chemise de cylindre (6) est maintenue par la collerette d'appui (16) de manière telle qu'une chute de la chemise de cylindre (6) est empêchée.

3. Procédé selon la revendication 1 ou la revendication 2, **caractérisé en ce que** le piston (1) et la chemise de cylindre (6), pendant le montage et / ou le démontage, sont poussés dans le bloc moteur (7) et / ou sortis du bloc moteur (7) en étant maintenus ensemble par un dispositif de préhension (8) engrenant sur le piston (1).

4. Procédé selon la revendication 3, **caractérisé en ce que** le dispositif de préhension (8) s'engage, dans l'état posé sur le piston (1), dans au moins une rainure (4) située dans le piston (1), prévue de préférence pour un segment de piston.

5. Procédé selon la revendication 3, **caractérisé en ce que** le dispositif de préhension (8) présente des surfaces de préhension (20), de préférence obliques, pour mettre en prise par l'arrière le piston (1).

6. Procédé selon l'une des revendications 1 à 5, **caractérisé en ce qu'**avant le démontage, le piston (1) ou sa bielle (3) est détaché d'un vilebrequin (11) du moteur à combustion interne et le piston (1) est poussé à l'extérieur de la chemise de cylindre (6) si loin que le piston (1) peut être saisi, de préférence par un dispositif de préhension (8).

7. Procédé selon l'une des revendications 1 à 6, **caractérisé en ce que** la bielle (3) et / ou le piston (1) sont centrés dans la chemise de cylindre (6), de préférence automatiquement, par la collerette d'appui (16) et, le cas échéant, au moins une autre surface d'appui (17) sur le piston (1) et / ou la bielle (3) lors du montage et / ou du démontage.

8. Procédé selon l'une des revendications 1 à 7, **caractérisé en ce que** la chemise de cylindre (6) pendant le montage et / ou le démontage, est soutenue ou maintenue par la collerette d'appui (16) sur son bord (18) dirigé en position de montage vers un vilebrequin (11).

9. Procédé selon l'une des revendications 1 à 8, **caractérisé en ce que** pendant le montage et / ou le démontage, la chemise de cylindre (6) est soutenue ou maintenue sur au moins deux collerettes d'appui (16, 16') formées de préférence d'une seule pièce, disposées sur une bielle (3) du piston (1).

10. Dispositif avec une chemise de cylindre (6) et un piston (1) disposé à l'intérieur et une bielle (3) disposée sur le piston (1), approprié pour un procédé selon l'une des revendications 1 à 9, dans lequel la bielle (3) présente une collerette d'appui (16) disposée de préférence d'une seule pièce, sur laquelle la chemise de cylindre (6) peut être soutenue ou maintenue pendant le montage et / ou le démontage, **caractérisé en ce que** sur le piston (1) et / ou la bielle (3) est prévue au moins une autre surface d'appui (17), laquelle, de préférence conjointement avec la collerette d'appui (16) ou les collerettes d'appui (16, 16'), est appropriée pour centrer le piston (1) et / ou la bielle (3) dans la chemise de cylindre (6).

11. Dispositif selon la revendication 10, **caractérisé en ce que** la bielle (3) présente au moins deux collerettes d'appui (16, 16') disposées de préférence d'une seule pièce, sur lesquelles la chemise de cylindre (6) peut être soutenue ou maintenue pendant le montage et / ou le démontage.

12. Dispositif selon la revendication 10 ou 11, **caractérisé en ce que** la collerette d'appui (16) ou les collerettes d'appui (16, 16') et / ou l'autre surface d'appui (17) est disposée sur la zone d'extrémité, orientée en position de fonctionnement vers un vilebrequin (11), de la bielle (3), de préférence dans la zone d'un oeil de la tête de bielle (19).

13. Dispositif selon l'une des revendications 10 à 12, **caractérisé en ce que** la bielle présente un diamètre maximal qui est supérieur au diamètre interne de la chemise de cylindre.

14. Moteur à combustion interne, actionné en particulier de façon fixe, avec un dispositif selon l'une des revendications 10 à 13.

15. Dispositif selon l'une des revendications 10 à 13, **caractérisé en ce que** le dispositif comprend un dispositif de préhension pour enserrer le piston (1), dans lequel le dispositif de préhension (8) présente au moins une partie en saillie pour engagement dans une rainure (4) sur le piston (1).

16. Dispositif selon la revendication 15, **caractérisé en ce que** le dispositif de préhension (8) présente deux demi-coques (8').
